Europäisches Patentamt

European Patent Office

Office européen des brevets

(11) Publication number: **0 077 881**
**B1**

## EUROPEAN PATENT SPECIFICATION

(45) Date of publication of patent specification: **18.05.88**

(21) Application number: **82106647.9**

(22) Date of filing: **23.07.82**

(51) Int. Cl.⁴: **C 04 B 37/00, H 01 F 1/34,**
**H 01 F 10/20, G 11 B 5/235**

(54) **Bonding ceramic components and removing bubbles from bonding material.**

(30) Priority: **26.10.81 US 315114**

(43) Date of publication of application:
**04.05.83 Bulletin 83/18**

(45) Publication of the grant of the patent:
**18.05.88 Bulletin 88/20**

(84) Designated Contracting States:
**DE FR GB**

(56) References cited:
**GB-A-1 300 864**
**GB-A-1 369 458**
**GB-A-1 401 349**
**US-A-3 687 650**

**PATENTS ABSTRACTS OF JAPAN, Vol. 2, nr.**
**42, March 20, 1978, page 412 (E-78) & JP-A-53**
**7218 (MATSUSHITA DENKI SANGYO K.K.),**
**23-01-1978.**

(73) Proprietor: **International Business Machines**
**Corporation**
**Old Orchard Road**
**Armonk, N.Y. 10504 (US)**

(72) Inventor: **Rigby, Eugene Bertrand**
**2120 North Klondike Drive**
**Tucson Arizona 85715 (US)**
Inventor: **Robinson, Neil Lloyd**
**12425 East Suttermill Street**
**Tucson Arizona 85715 (US)**

(74) Representative: **Petersen, Richard Courtenay**
**et al**
**IBM Svenska AB Patent Operations Box 962**
**S-181 09 Lidingö (SE)**

## Description

This invention relates to methods of bonding ceramic components and to methods of removing bubbles from bonding material between ceramic components. The invention is applicable particularly, but not exclusively, to the making of magnetic heads which include glass bonded ferrite components.

In the manufacture of magnetic heads, it is often necessary to bond two or more pieces of ceramic material together. Ferrite is a common core material and two pieces of ferrite are normally bonded together using glass as a bonding material. The ferrite pieces are positioned so as to form a magnetic gap which is filled with the glass bonding material.

In known methods of producing a magnetic head core having a non-magnetic gap, channel shaped components of ferrite material are positioned so that their gap-defining surfaces can be filled with glass. The glass serves to bond the ferrite components together in the final head configuration. The bond is made either by positioning a thin foil of glass between the opposing ferrite surfaces and softening the glass by heating while pressing the ferrite pieces towards one another, or by spacing the surfaces and causing molten glass to flow into the slots by capillary action.

However, in filling the gap with the glass, the surfaces of the ferrite may not be fully wet by the glass and air may be occluded in the gap. The air may be the result of a reaction between the ceramic and the glass. The core pieces and the magnetic gap itself are generally extremely small. Any cavities in the glass material due to the occluded air may occupy a relatively large volume of the magnetic gap thereby weakening the bond between the glass and the ferrite. The cavities or bubbles formed in the glass result in inferior head parts or, in extreme cases, the outright rejection of the head material.

US—A—3,687,650 discloses a process for preventing the occurrence of bubbles in the glass bond of ferrite components by reducing the pressure in a closed environment while the bond is made by applying heat. The pressure in the environment is then increased, while the heat is at least maintained, causes the glass to flow into the gap. The heat is then reduced to harden the glass and bond the ferrite components.

It has been found that lowering the pressure in a closed environment during a melt and flow of the glass bonding material causes the glass to froth and cause more bubbles.

It is, therefore, an object of the present invention to provide an improved method of removing bubbles from bonding material between bonded ceramic components.

The present invention is disclosed in the appended claims.

The present invention relates to a method of removing bubbles from the bonding material between bonded components of a bonded ceramic piece, comprising the steps of inserting the bonded components into an enclosed chamber, introducing into the enclosed chamber inert gas at a pressure in excess of atmospheric, heating the chamber to at least the softening point of the bonding material, holding the temperature and pressure within the chamber for a period of time necessary to reduce the quantity and size of bubbles in the bonding material, cooling the component whilst maintaining the pressure in the chamber, holding the chamber during the cooling at an anneal temperature of the bonding material for a time necessary to anneal the bonding material, and releasing the pressure within the chamber.

How the present invention can be carried into effect is hereafter particularly described with reference to the accompanying drawings, in which:

Figure 1 shows ceramic material prepared for bonding according to the present invention;

Figure 2 illustrates standard processing steps for glass bonding ceramic components;

Figure 3 is a graph of viscosity versus temperature for a glass used in bonding;

Figure 4 is a diagrammatic illustration, partly in section, of closed environment apparatus for performing the method according to the present invention;

Figure 5 illustrates the processing steps for a method according to the invention; and

Figure 6 is a graph of time against temperature for specific glass and ceramic components during the processing steps of Figure 5.

In a preferred embodiment of the invention, ferrite pieces are bonded by a method which removes bubbles from the bond. The preferred bonding material is glass, the preferred ceramic is nickel-zinc ferrite, and the preferred method for carrying out the invention is by use of a hot isostatic pressure furnace.

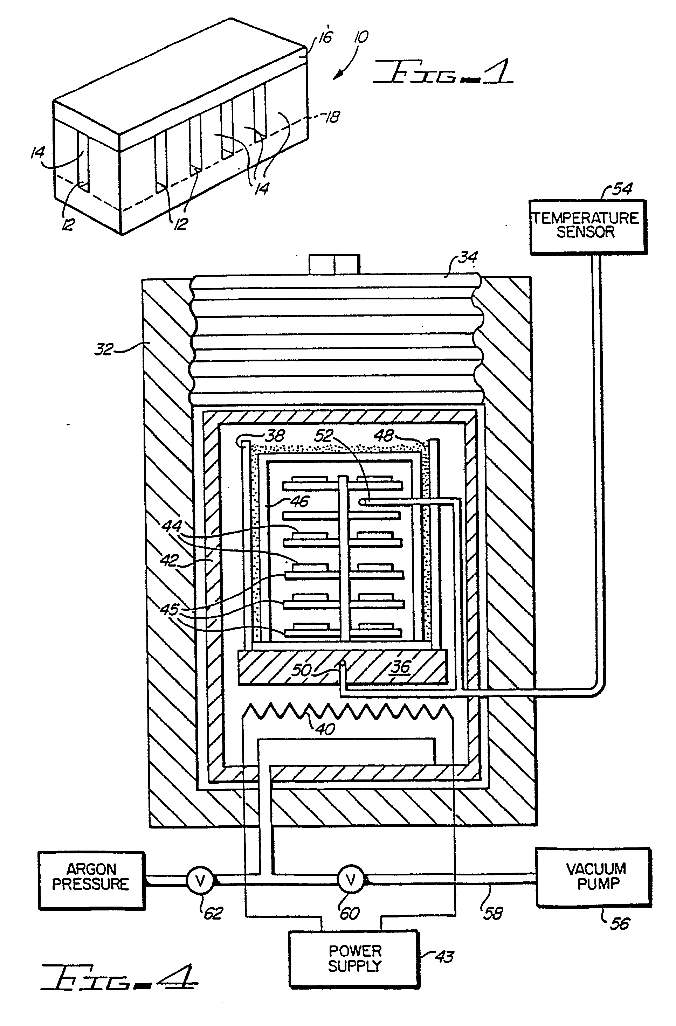

A ferrite ceramic ingot 10 (Fig. 1) has grooves 12 cut into the ferrite to form individual magnetically isolated blocks 14. Bonding in the form of a block of glass 16 is positioned above the gaps 12. The components are heated to melt the glass 16 causing it to flow into the slots 12, and then the bubbles in the glass are dissipated by further steps. The ferrite is then cut at the dotted line 18. The ferrite blocks 14 are bonded and magnetically insulated by the glass in the slots 12 and are then suitable for further construction to become a magnetic head.

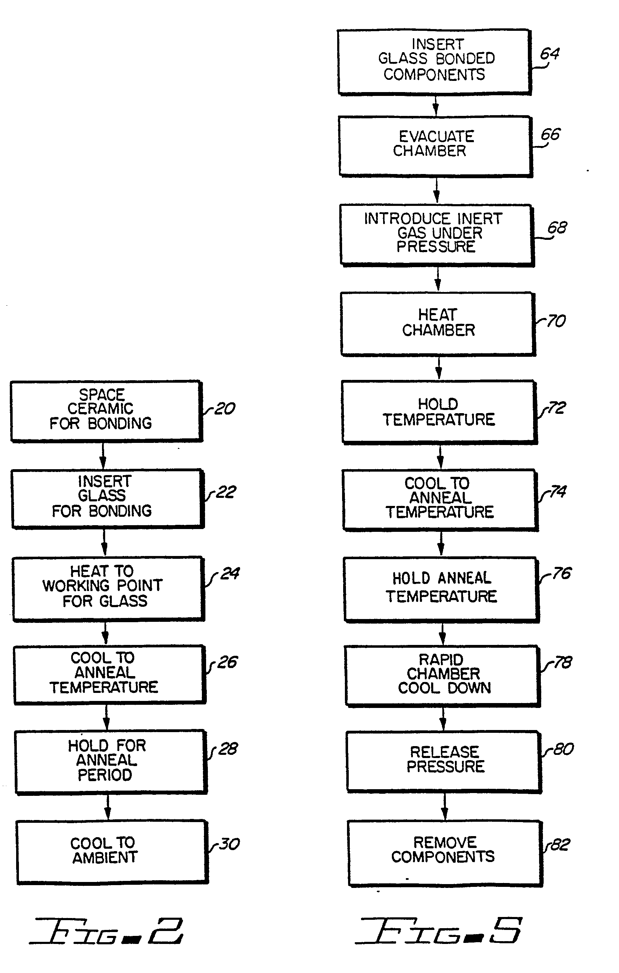

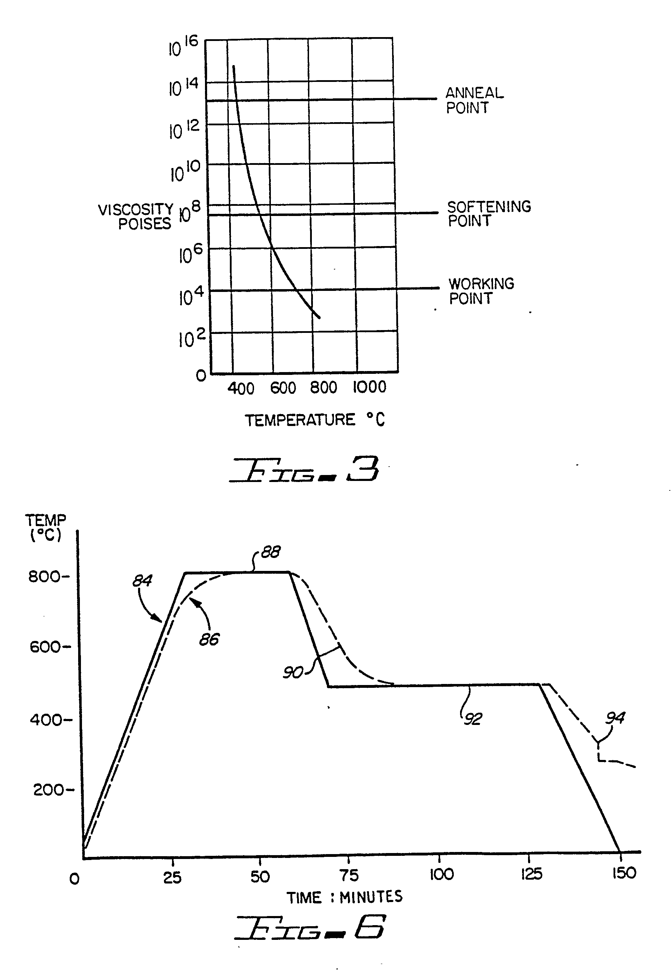

In a first step 20 (Fig. 2), ferrite ceramic pieces are spaced for bonding to form a magnetic gap. This corresponds to cutting the grooves 12 in the ferrite 10 in Figure 1. In the next procedure step 22, glass material for bonding, such as the block of glass 16 of Figure 1, is placed adjacent to the gaps for capillary action according to the well known art of bonding. The next procedure step 24 is to heat the components at least to the softening point, and preferably to the working point, of the glass material. In this step of the process, the components are generally at atmospheric pressure in an air furnace which is heated to a

temperature known as the working point of the glass. The necessary temperature to raise the air furnace to reach the working point of the particular glass used will be discussed later in relation to Figure 3 which shows the viscosity of the glass at different temperatures. It should be understood that for different glass compositions, a different viscosity will be obtained at various temperature ranges. In the next step 26 in the process of Figure 2, the components are cooled to the anneal point temperature of the glass. This anneal temperature is then held for a period of time in the next process step 28. The components are then cooled to ambient temperature in the process step 30. It should be understood that the anneal step is not absolutely necessary at this time because the glass will be reheated again according to the procedural steps of the present invention.

The process shown in Figure 2 is a standard process and the preferred process according to the present invention to arrive at a glass bonded component that is then treated in accordance with the present invention. The preferred procedure for the present invention is illustrated in Figure 5 using a hot isostatic press furnace, as shown in Figure 4.

For a better understanding of the invention, the viscosity of the glass material used for the bond should be considered, because the viscosity of glass differs at different temperatures according to the composition of the glass used. At ordinary temperatures, the viscosity of glass is so high that it is considered to be infinite, though technically it is a liquid. As the temperature of the glass is raised, the viscosity decreases and the glass gradually assumes the more usual character of a liquid. As shown in Figure 3, three points on the viscosity temperature curve have been indicated to represent the softness of the glass at important points in its viscosity change. These points are generally known for the glass bonding material selected.

The following definitions for anneal, softening and working points are taken from those used by the American Society for Testing Materials. The anneal point is the temperature at the upper end of the annealing range at which the internal stress of the glass is substantially relieved in a short period of time. The anneal point corresponds to a viscosity of approximately 10 terapoises when measured by the tentative method of test for anneal point of glass (ASTM designation C.336). In an annealing operation, the glass is heated somewhat above the annealing point and slowly cooled to a somewhat lower temperature.

The softening point is the temperature at which a fibre of specific diameter and length elongates under its own weight at a specific rate. This temperature generally corresponds to a viscosity of almost 100 Megapoises. At the softening point, the glass deforms very rapidly and starts to adhere to other bodies such as the ferrite pieces.

The working point is the temperature where the glass is soft enough for hot working by most of the common methods. The viscosity of the glass at the working point is approximately 10 kilopoises.

Figure 3 shows a graph of the viscosity curve for a glass used in the preferred embodiment. Thus, a temperature slightly in excess of 400 degrees Celsius is necessary to reach the anneal point of the glass material. A temperature between 500 and 600 degrees Celsius is necessary to reach the softening point of the glass and a temperature of approximately 700 degrees Celsius is necessary to reach the working point of the glass.

A hot isostatic press furnace (Fig. 4), used to perform the procedures of the preferred embodiment, includes an enclosure 32 made of a high strength steel. The entrance to the furnace is from the top which is then closed off by a closure 34, generally made of a stainless steel. A stand 36 inside the furnace supports a crucible 38. The stand 36 and a heating element 40 are enclosed in a heat shield 42. The electrical power directed to the heating element 40 is controlled by a power supply 43.

Components 44 to be treated are placed on supports 45 such that a plurality of components may be treated in one operation. A second crucible 46 is placed upside down inside the crucible 38 .to enclose the components to protect the furnace from ceramic contamination. The crucibles do not form a pressure seal. Alumina powder 48 is placed over and around the second crucible 46 to prevent gases of the operation from contaminating the furnace. A control thermocouple 50 gauges the amount of heat within the furnace itself. A sample thermocouple 52 provides an indication of the temperature of the components. Both the control thermocouple 50 and the component thermocouple 52 are directed to a temperature sensor 54. The temperature sensor 54 provides an external indication of the temperatures internal to the furnace. The interior of the furnace chamber is connected to two valves 60 and 62. The valve 60 is connected through a duct 58 to a vacuum pump 56, by whose operation the chamber may be evacuated under control of the valve 60. A supply of an inert gas under pressure, such as argon, is connected to the valve 62, so that the inert gas may be inserted under pressure under control of the valve 62.

In the first step 64 of the procedure shown in Figure 5, glass bonded components 44 as obtained through the procedure of Figure 2, for instance, are inserted into the furnace. The next step 66 is to evacuate the internal chamber of the furnace. This step is performed by activating the vacuum pump 56 and turning on the valve 60 while the valve 62 is closed to prevent the entry of the argon gas. In this step air is removed from the chambers. The next step 68 is to introduce the inert gas under pressure. In this step, the valve 60 is closed and the vacuum pump 56 stopped, then the valve 62 is opened to allow argon gas under pressure to enter the chamber. The initial pressure of the argon gas is 41.3685 MPa (six thousand pounds per square inch). In step 70, the chamber is then heated quickly to a temperature which is above the glass softening point and may extend above the glass working point. As shown in Figure 3, for the glass used, the temperature is above approximately 550 degrees Celsius and can be raised to 800 degrees Celsius. For the preferred embodiment, the temperature in the furnace is raised to 800 degrees Celsius, that is, above the working point.

The pressure of the argon gas approximately doubles with the increase in temperature. The pressure inside the furnace thus rises to 12 to 13 KPSI from 6 KPSI, (from 41.3685 MPa) to 82.738 to 89.632 MPa (from 6 to 12 to 13 KPSI).

It has been discovered by experimentation that approximately 20.6843 MPa (3 KPSI) is needed during this step of the procedure to accomplish the reduction of the bubbles by a reasonable amount. Below this pressure, the number and size of the bubbles show no appreciable abatement. Thus a gas pressure of approximately 10.3421 MPa (1.5 KPSI) is needed in the step 68, when the argon gas is originally introduced into the cold furnace.

In step 72, the temperature of 800 degrees Celsius is then held for a period of time. The minimum period of time is approximately five minutes, with the preferred period of time being approximately thirty minutes. In the next process, step 74, the furnace is cooled to the optimum anneal temperature which for the glass used is 474 degrees Celsius plus and minus 5 degrees Celsius. The coiling to the anneal temperature is carried out rapidly. The temperature is then held at the anneal point in step 76 to allow the glass used as a bonding material to be stress relieved. For the preferred embodiment the temperature is held for one hour. The chamber is then rapidly cooled in step 78, and then the pressure within the furnace is released in step 80, by opening the valve 60. After cooling, the components are removed in step 82.

The temperature of the furnace may be controlled against time in accordance with the temperature cycle charted in Figure 6. The solid line 84 shows the intended programmed cycle, while the dotted line 86 shows the actual temperature reached by the components as sensed by the thermocouple 52. The programmed cycle thus calls for heating the chamber to approximately 800 degrees Celsius in as short a time as can be accomplished. This temperature is then held on a plateau 88 for a period of approximately thirty minutes. As indicated by the slope 90, the furnace is rapidly cooled to reach a temperature of approximately 474 degrees Celsius, which is held for one hour on a plateau 92. The furnace is then rapidly cooled. The entire cycle takes approximately two and one-half hours. The drop in the temperature at 94 is due to the internal pressure in the furnace being released. At this temperature, the viscosity of the glass is greater than 10,000 terapoises.

In another embodiment, all the glassing steps can be performed in a hot isostatic pressure furnace. Thus, the entire glassing can be performed in one continuous operation without removal from an air furnace to a hot isostatic pressure furnace. The furnace is left at atmospheric pressure during the initial bonding step. After the glass flows into the gaps, a high pressure of inert gas, at least 20.6843 MPa (3 KPSI) with a preferred pressure of at least 68.948 MPa (10 KPSI), must be pumped into the hot furnace. The increase in pressure of the inert gas as a result of any increase in temperature is not available. Thus the process steps would be to insert the spaced ceramic parts for bonding as in step 20 into the HIP furnace.

The next step is to insert the glass for bonding as in step 22. The components are then heated to at least the working point of the glass, approximately 800 degrees Celsius for the glass used, as in step 24.

The next step is as in step 68 to introduce the inert gas under pressure. A higher pressure than that described previously is necessary, at least 20.6843 MPa (3 KPSI), because the increase in pressure resulting from heat applied is not available. The process continues, as in step 72, to hold the temperature for a period of time to allow the pressure increase to reduce the size and number of bubbles in the glass. The procedure continues, as in step 74 to cool the furnace to the anneal temperature of the glass, then as in step 76, to hold the anneal temperature, then as in step 78, rapidly to cool down the chamber, then as in step 80, to release the pressure, and then as in step 82 to remove the components.

It is important that the glass flow into the bond gap at atmospheric pressure, and that the temperature be held at the working point of the glass while the inert gas under pressure is introduced into the hot isostatic pressure furnace.

The separation of the glassing and debubbling is preferred because pressurizing the heated furnace to the preferred pressure of approximately 82.738 to 89.632 MPa (12 to 13 KPSI), is much more difficult than pressurizing to 41.3685 MPa (6 KPSI) and heating. HIP furnaces are generally designed to provide uniform temperature and control under high argon gas pressure. Further, it has been found to be easier to do the glassing and debubbling operations separately, because the attachment of the glass to the ceramic pieces is under better control in an air furnace. The high pressure of the HIP furnace causes inaccessability and loss of control over checking of the alignment of the pieces.

It will be appreciated that many modifications of structure, arrangement, proportions, elements, materials and components may be made without departing from the scope of the invention. For instance, many different types of bonding materials, including different types of glasses as well as other ceramics, could be used. Epoxy resins, for instance, may be used as bonding materials in forming magnetic gaps for heads. Different glass materials are available for bonding ferrite ceramics for the formation of magnetic

gaps. The necessary temperatures and the necessary time periods for accomplishing the invention can be obtained without undue experimentation. Other configurations of furnace could be used. The bonding need not be between spaced gaps in a single block, for example, two separate pieces of ceramic can be held together in a clamp at a specific gap and bonded together by the glass.

## Claims

1. A method of bonding components of a ceramic piece with bonding material and removing bubbles in the bonding material between the components, comprising the steps of spacing the components for bonding, positioning bonding material adjacent the components, heating the spaced components and bonding material to a temperature to cause a flow of the bonding material into the space, cooling the bonded components to an ambient temperature, exposing the components to an inert gas at a pressure in excess of atmospheric, heating the components to at least the softening point of the bonding material, holding the temperature and the pressure for a period of time necessary to reduce the quantity and size of bubbles in the bonding material, cooling the components whilst maintaining the pressure, holding the components during cooling at an anneal temperature of the bonding material for a time necessary to anneal the bonding material, cooling down the components and releasing the pressure.

2. A method according to claim 1, in which the bonding material is glass.

3. A method according to claim 1 or 2, in which the inert gas is introduced at a pressure of at least 20.6842 MPa (3,000 PSI).

## Patentansprüche

1. Verfahren zum Verbinden von Komponenten eines Keramikteils mit Bindematerial und Entfernen von Blasen in dem Bindematerial zwischen den Komponenten mit den Verfahrensschritten des Anordnens der Komponenten mit Zwischenraum zum Verbinden, des Anordnens von Bindematerial angrenzend an die Komponenten, des Erwärmens der mit Zwischenraum angeordneten Komponenten und des Bindematerials auf eine Temperatur, die ein Fließen des Bindematerials in den Zwischenraum bewirkt, des Abkühlens der verbundenen Komponenten auf Umgebungstemperatur, des Aussetzens der Komponenten einem inerten Gas bei einem Druck über Atmosphärendruck, des Erwärmens der Komponenten auf wenigstens den Erweichungspunkt des Bindematerials, des Haltens der Temperatur und des Druckes für eine Zeitdauer, die für eine Verringerung der Menge und Größe von Blasen im Bindematerial erforderlich ist, des Abkühlens der Komponenten unter Aufrechterhaltung des Druckes, des Haltens der Komponenten während des Aküühlens auf einer Ausglühtemperatur des Bindematerials für eine Zeit, die für das Ausglühen (Spannungsfreimachen) des Bindematerials erforderlich ist, des Herunterkühlens der Komponenten und des Ablassens des Druckes.

2. Verfahren nach Anspruch 1, bei welcher das Bindematerial Glas ist.

3. Verfahren nach Anspruch 1 oder 2, bei welcher das inerte Gas bei einem Druck von wenigstens 20,6842 MPa (3000 PSI) eingeführt wird.

## Revendications

1. Procèdé d'assemblage de composants d'une pièce de céramique avec une matière d'assemblage et d'élimination des bulles dans la matière d'assemblage entre les composants, consistant à espacer les composants pour l'assemblage, à positionner la matière d'assemblage à proximité des composants, à chauffer les composants espacés et la matière d'assemblage jusqu'à une température qui entraine l'écoulement de la matière d'assemblage dans l'espace, à refroidir les composants assemblés jusqu'à une température ambiante, à exposer les composants à un gaz inerte sous une pression qui dépasse la pression atmosphérique, à chauffer les composants jusqu'au moins le point de ramollissement de la matière d'assemblage, à maintenir la température et la pression pendant une période nécessaire pour réduire la quantité et la grosseur des bulles dans la matière d'assemblage, à refroidir les composants tout en maintenant la pression, à maintenir les composants pendant le refroidissement à une température de recuit de la matière d'assemblage pendant un temps nécessaire pour recuire la matière d'assemblage, à refroidir les composants et à relâcher la pression.

2. Procèdé selon la revendication 1, dans lequel la matière d'assemblage est du verre.

3. Procèdé selon la revendication 1 ou 2, dans lequel le gaz inerte est introduit sous une pression d'au moins 20,6842 MPa (3.000 PSI).

0 077 881

Fig-1

Fig-4

TEMPERATURE
SENSOR

ARGON
PRESSURE

VACUUM
PUMP

POWER
SUPPLY

INSERT
GLASS BONDED
COMPONENTS — 64

↓

EVACUATE
CHAMBER — 66

↓

INTRODUCE INERT
GAS UNDER
PRESSURE — 68

↓

HEAT
CHAMBER — 70

↓

HOLD
TEMPERATURE — 72

↓

COOL TO
ANNEAL
TEMPERATURE — 74

↓

HOLD ANNEAL
TEMPERATURE — 76

↓

RAPID
CHAMBER
COOL DOWN — 78

↓

RELEASE
PRESSURE — 80

↓

REMOVE
COMPONENTS — 82

SPACE
CERAMIC
FOR BONDING — 20

↓

INSERT
GLASS
FOR BONDING — 22

↓

HEAT TO
WORKING POINT
FOR GLASS — 24

↓

COOL TO
ANNEAL
TEMPERATURE — 26

↓

HOLD FOR
ANNEAL
PERIOD — 28

↓

COOL TO
AMBIENT — 30

Fig-2

Fig-5

_Fig. 3_

_Fig. 6_